Europäisches Patentamt

European Patent Office

Office européen des brevets

(11) Veröffentlichungsnummer: **0 030 714**
**B1**

# EUROPÄISCHE PATENTSCHRIFT

(45) Veröffentlichungstag der Patentschrift: **18.09.85**

(21) Anmeldenummer: **80107808.0**

(22) Anmeldetag: **11.12.80**

(51) Int. Cl.⁴: **E 04 C 2/36, B 29 C 67/00**

(54) Verfahren bei der Herstellung eines Bauelements.

(30) Priorität: **12.12.79 DK 5283/79**

(43) Veröffentlichungstag der Anmeldung:
**24.06.81 Patentblatt 81/25**

(45) Bekanntmachung des Hinweises auf die
Patenterteilung:
**18.09.85 Patentblatt 85/38**

(84) Benannte Vertragsstaaten:
**AT BE CH DE FR GB IT LI LU NL SE**

(56) Entgegenhaltungen:
**FR-A-1 301 300**
**US-A-2 700 632**

**ADHESIVES AGE, Band 20, Juni 1977, Seiten
23-28 C. STROBECH: "Bonding lightweight
insulated sandwich elements with
polyurethane adhesives"**

(73) Patentinhaber: **SUPERFOS GLASULD
A/S(Superfos a/s)
No. 30 Frydenlundsvej
DK-2950 Vedbaek (DK)**

(72) Erfinder: **Rasmussen, Lauritz Bent Lund
No. 14 Prinsessevej
DK-2800 Lyngby (DK)**

(74) Vertreter: **Gunschmann, Klaus, Dipl.-Ing. et al
Patenanwälte Dipl.-Ing. H. Mitscherlich Dipl.-Ing.
H. Gunschmann Dipl.-Ing. Dr.rer.nat. W. Körber
Dipl.-Ing. J. Schmidt-Evers Dipl.-Ing. W. Melzer
Steinsdorfstrasse 10
D-8000 München 22 (DE)**

## Beschreibung

Die Erfindung betrifft ein Verfahren bei der Herstellung eines Bauelementes, das ein einstückiges, plattenförmiges und formfestes Kernelement aus einem Material, insbesondere einem Isolationsmaterial, mit einer offenen Struktur umfasst, die den Durchtritt von Luft zulässt, welches Kernelement an den sich gegenüberliegenden grossen Seitenflächen und sowohl den Stirn- als auch den schmalen Seitenflächen mit verhältnismässig dünnen, aus einem härteren, im wesentlichen luftundurchlässigen Material bestehenden Deckplatten bzw. mit Stirn- und Schmalseitenwänden bleibend zu verkleiden ist, welche Deckplatten mit dem Kernelement unlösbar verbunden werden durch Verleimen mit einem unter der Einwirkung von Feuchtigkeit schnell härtenden Klebstoff und mit einem durch Erzeugung eines Unterdruckes im Kernelement hervorgebrachten Pressdruck.

Aus einem Aufsatz von Christian Strøbech mit dem Titel "Bonding Lightweight Insulated Sandwich Elements with Polyurethane adhesives", der in der Zeitschrift ADHESIVE AGE, Vol. 20, Juni 1977, Seite 23—28 veröffentlicht worden ist, ist ein derartiges Verfahren bekannt, nach dem der zum Zusammenpressen von Deckplatten mit einem Kernelement mit unverkleideten Stirn- und schmalen Seitenflächen vorgeschriebene Unterdruck durch Anwendung eines Vakuumpresstisches mit an sich bekannter Ausgestaltung erreicht wird, welcher Presstisch eine Tischplatte besitzt, auf der die genannten Elemente in Sandwich-Anordnung in der vorgeschriebenen Reihenfolge auf einem Stück Gewebe, z.B. Hessian, angebracht werden, nachdem Klebstoff auf die Deckplatten aufgetragen worden ist. Die Sandwich-Anordnung wird danach auf der Oberseite mit einem zweiten Stück Gewebe, z.B. Hessian, abgedeckt, das wiederum mit einer luftundurchlässigen Kunststofffolie überdeckt wird, welche dichtschliessend an den Rändern der Tischplatte befestigt wird. Das Absaugen von Luft zwecks Erzeugung des erforderlichen Unterdrucks erfolgt durch eine Anzahl von Stutzen, die an der Tischplatte des Presstisches selbst, und zwar längs der Mittellinie derselben, vorgesehen sind. Der Strömungsweg für die abgesaugte Luft verläuft somit hauptsächlich durch die abgedeckten Stirn- und schmalen Seitenflächen des Kernelements und das unter der Sandwich-Anordnung liegende Gewebe hindurch zu den genannten Absaugstutzen.

Darüber hinaus, dass Vakuumpresstische der genannten Art an sich ziemlich kostspielig sind, ist ihre Bedienung kompliziert, so dass die Ausübung des im Aufsatz beschriebenen Verfahrens erhebliche Sorgfalt erfordert und verhältnismässig zeitraubend ist, da die Herstellung jedes einzelnen Bauelements eine ganze serie von Arbeitsgängen erfordert. Es geht auch aus dem Aufsatz hervor, dass sich nach dem beschriebenen Verfahren pro Presstisch nur 2—4 Elemente im Laufe eine achtstündigen Arbeitstages herstellen lassen.

Da eine derartig geringe Producktionsleistung für industrielle Zwecke als unzulänglich betrachtet werden muss, schreibt des Aufsatz bei einer automatisierten Produktion die Benutzung üblicher mechanischer Presstechnik vor.

Insbesondere bei der Herstellung von Bauelementen der genannten Art mit grösseren Abmessungen und unter Anwendung modernerer, schnellhärtender Klebstofftypen, z.B., wie im Aufsatz vorgeschlagen, Einkomponenten-Polyurethanleim, hat sich bei der Anwendung mechanischen Zusammenpressens, wie es bei der Herstellung von Elementen der hier erwähnten Art u.a. aus der deutschen Auslegeschrift Nr. 1.484.344 bekannt ist, jedoch erwiesen, dass es sehr schwierig ist, während das Härtens Klebstoffes einen ausreichend gleichmässig verteilten Pressdruck und damit eine geleimte Verbindung mit ausreichend guten Festigkeitseigenschaften zu erzielen. Ferner erfordert die Anwendung mechanischer Presstechnik, genau wie die im Aufsatz vorgeschlagene Vakuumpresstechnik, eine erhebliche Anzahl von Pressstationen, damit sich eine Für die industrielle Herstellung angemessen hohe Produktionsleistung erzielen lässt.

Bei der Verkleidung von Zellstrukturelementen sind aus der FR—A—1301300 und der US—A—2700632 weitere Verfahrensweisen bekannt, bei denen ein wärmehärtendes Klebemittel durch Erzeugung eines Vakuumpressdruckes und gleichzeitige Wärmebeeinflussung ausgehärtet wird. Der Pressdruck wird durch Absaugpassagen in besonderen luftdicht anschliessenden Kantenelementen erzeugt, die nur während des Pressverfahrens im Gebrauch sind.

Mit der Erfindung wird bezweckt, ein Verfahren der eingangs genannten Art anzugeben, durch das in bezug auf die aus dem obengenannten Aufsatz bekannte Presstechnik eine erhebliche Vereinfachung und Verbilligung der Herstellung bei voller Erhaltung der Vorteile erreicht wird, die an sich schon mit der Anwendung schnellhärtender Klebstofftypen verbunden sind, während in bezug auf die bekannten mechanischen Pressverfahren ausser einer Vereinfachung und Verbilligung auch geleimte Verbindungen mit wesentlich verbesserten Festkeitseigenschaften erzielt werden.

Zwecks Lösung dieser Aufgabe ist das erfindungsgemässe Verfahren dadurch gekennzeichnet, dass die Stirn- und Schmalseitenwände und die eine Deckplatte zuerst zu einem offenen Kasten zur Aufnahme des Kernelements zusammengesetzt werden, wonach die Deckplatten auf den Seitenflächen, die dazu bestimmt sind, gegen das Kernelement anzuliegen, befeuchtet und danach mit Klebstoff versehen werden, bevor das Kernelement in dem genannten offenen Kasten angebracht wird, und dass nach dem Zusammenfügen des Kastens mit der anderen Deckplatte der Pressdruck durch Absaugen direkt durch eine zu diesem Zweck ausgebildete Öffnung in einer der bleibenden Stirn- und Schmalseitenwände erzeugt wird.

Die Erfindung beruht somit auf der Erkenntnis, dass die Deckplatten sowie die Stirn- und Schmalseitenwände, mit denen das Bauelement bleibend verkleidet werden soll, selbst bei einer verhältnismässig einfachen Zusammenfügung dem Luftdurchtritt einen genügend grossen Widerstand bieten und somit die luftdichte Kunststofffolie oder besondere Kantenelemente ersetzten können, die bei dem bekannten Vakuumpressverfahren zum Abdecken vorgeschrieben werden.

Durch das besondere Merkmal des erfindungsgemässen Verfahrens, dass die zur Beschleunigung des Härtens von Klebstoffen der genannten Art erforderliche Feuchtigkeitsmenge durch Befeuchtung der einen Seite der Deckplatten zugeführt wird, bevor man auf dieselbe Seite Klebstoff aufträgt, wird eine maximale Ausnutzung des Vorteils sichergestellt, den die sehr kurzen Härtungszeiten derartiger Klebstoffe darstellen, und zwar wird durch das anschliessende Absaugen von Luft die Feuchtigkeit sozusagen in die darüberliegende Klebstoffschicht hinein- und durch diese hindurchgesaugt. Dadurch wird eine erhebliche Verkürzung der Behandlungszeit in bezug auf diejenige nach der im obengenannten Aufsatz beschriebenen Technik erforderliche erzielt, nach welcher vorgeschrieben wird, die Feuchtigkeitsmenge durch Befeuchtung des Kernmaterials zuzuführen, wobei die Tendenz besteht, dass die Feuchtigkeit durch das Absaugen entfernt wird, ohne erreichen zu können, in wesentlichem Ausmass auf den Klebstoff einzuwirken.

Die Erfindung wird im folgenden unter Bezugnahme auf die beigeschlossene, schematische Zeichnung näher erklärt. Es veranschaulicht

Fig. 1 das erfindungsgemässe Verfahren durch eine Draufsicht auf eine Bauelement mit einer inwendigen Kernplatte, von der die eine Deckplatte entfernt und an die eine Saugeinrichtung angeschlossen ist, und

Fig. 2 einen Querschnitt des mit beiden Deckplatten versehenen Bauelements längs der Linie II—II in Fig. 1.

Ein Bauelement der nach dem erfindungsgemässen Verfahren hergestellten Art besteht aus einer inwendigen Kernplatte 1 aus einem Material mit einer offenen Struktur, die den Durchtritt von Luft zulässt, welche Kernplatte an ihren grossen Seitenflächen mit Deckplatten 2 und 3 und an den Stirn- und schmalen Seitenflächen mit Stirn- und Schmalseitenwänden 5 und 7 bzw. 4 und 6 verkleidet ist.

Wie auf das Zeichnung gezeigt ist, findet als Kernplatte bevorzugterweise eine formstabile Lamellenisoliertafel von der Art Anwendung, die in der europäischen Patentanmeldung Nr. 79100725.5 (Veröffentlichungsnr. 0 004 086) der Anmelderin beschrieben ist. Derartige Isoliertafeln bestehen bevorzugterweise aus Mineralwollelamellen 8, deren Faserrichtung rechtwinklig zu den Seitenflächen der Tafel verläuft und die zusammengehalten werden durch Verbindungsmittel 9, z.B. Schnuren oder hochkant gestellte Wellpappestreifen, die in Einschnitte eingelegt oder -gesteckt und in diesen festgeleimt sind, welche rechtwinklig zur Längsrichtung der Lamellen 8 verlaufen. Beim erfindungsgemässen Verfahren können jedoch den jeweiligen Gegebenheiten entsprechend auch andere Formen von Kernplatten Anwendung finden, z.B. Platten aus solchen porösen Schaumplastmaterialien, wie den im eingangs erwähnten Aufsatz angegebenen.

Die Deckplatten 2, 3 und die Stirn- und Schmalseitenwände 4—7 bestehen bevorzugterweise aus Furnierplatten aus Holze, z.B. Sperrholz. Je nach Anwendungsgebiet, können jedoch auch andere Materialien, wie z.B. glasfaserarmierte Kunststoffe oder sogar Metallplatten, z.B. Aluminium, Anwendung finden.

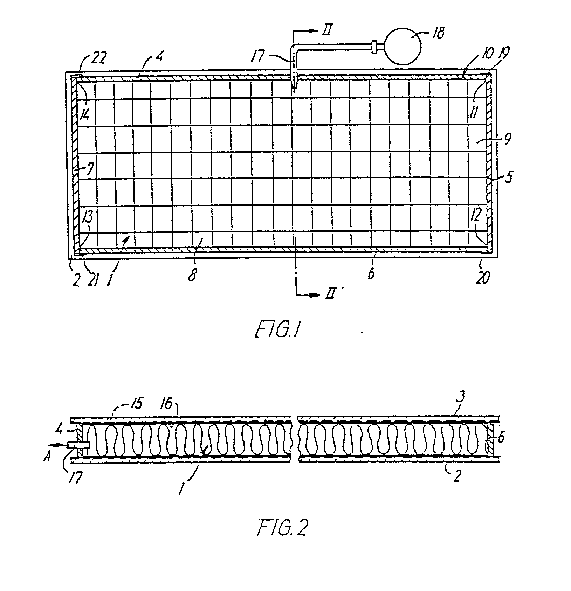

Nach dem erfindungsgemässen Verfahren wird zuerst aus den Stirn- und Schmalseitenwänden 4—7 und der einen Deckplatte 2 ein offener Kasten 10 wie der in Fig. 1 gezeigte dadurch hergestellt, dass die Stirn- und Schmalseitenwände 4—7 hochkant auf die Deckplatte 2 aufgeleimt und an den Ecken 11, 12, 13 und 14, wo sie zusammenstossen, miteinander verleimt werden.

Vor Anbringung der Kernplatte 1 werden danach, z.B. mit Hilfe eines geeigneten, nicht eingezeichneten Wasserzerstäubers, diejenigen Flächen befeuchtet, die durch Verleimen mit der Kernplatte 1 verbunden werden sollen, d.h. die dem Inneren des Kastens 10 zugekehrte Seite der Deckplatte 2 und ggf. die dem Inneren des Kastens zugekehrten Seiten der Stirn- und Schmalseitenwände 4—7 sowie die entsprechende Seite der zum Zusammenfügen mit dem Kasten 10 nach Anbringung der Kernplatte 1 bestimmten Deckplatte 3.

Versuche haben ergeben, dass bei Anwendung von Deckplatten 2 und 3 aus Sperrholz eine Wassermenge von etwa 30 g/m² eine zur Erstellung dieses Feuchtigkeitsfilms, der in Fig. 2 durch eine gestrichelte Linie 15 schematisch wiedergegeben ist, passende Menge darstellt.

Auf die befeuchteten Flächen wird anschliessend ein Klebstoff 16 eines Typs aufgetragen, der unter der Einwirkung von Feuchtigkeit schnell härtet. Als sehr gut geeigneter Klebstoff kann ein Einkomponenten-Polyurethanleim Anwendung finden, der einen in den letzteren Jahren entwickelten Leimtyp darstellt, der sich dadurch auszeichnet, dass er eine sehr kurze Härtungszeit besitzt und nicht die gesundheitsschädlichen Nebenwirkungen hat, die bei anderen bisher benutzten Klebstoffen, z.B. von Epoxidtyp, auftreten können.

Versuche haben ergeben, dass bei Anwendung einer Kernplatte 1 in Form einer Formstabilen Glaswollelamellenplatte und Deckplatten 2, 3 aus Sperrholz das Auftragen von Klebstoff in einer Mange von etwa 300 g/m² auf die genannten Flächen passend ist.

Nach dem Auftragen des Klebstoffs wird die Kernplatte 1 in dem in Fig. 1 wiedergegebenen Kasten 10 angebracht und die Deckplatte (3) auf dem aus den hochkant stehenden Stirn- und Schmalseitenwänden 4—7 bestehenden Kastenrand befestigt, z.B. durch Annageln.

In die eine Schmalseitenwand 4, in der schon vorher eine geeignete Öffnung zu diesem Zweck ausgebildet worden ist, wird dann eine rein schematisch wiedergegebener Saugstutzen 17 eingesetzt, der mit einer Saugeinrichtung 18 in Verbindung steht. Wie ersichtlich, empfiehlt es sich, dass das freie Ende des Saugstutzens 17 ein Stück in das Material in der Kernplatte 1 hineinragt.

Die Saugeinrichtung 18 kann von einer z.B. elektrisch angetriebenen Vakuumpumpe bekannter Konstruktion und mit einer 'Leistung gebildet werden, die ausreicht, in der Kernplatte 1 einen Unterdruck zu erzeugen, der dem erforderlichen Pressdruck entspricht, welcher für geleimte Verbindungen des beschriebenen Typs etwa 3000—5000 N/m² entspricht. Praktische Versuche haben gezeigt, dass ein Unterdruck der Grössenordnung 50—60 mbar passend ist. Das Absaugen ist in Fig. 2 durch einen Pfeil A angedeutet.

Versuche haben ferner erwiesen, dass sich mit nur einem einzelnen Saugstutzen wie dem wiedergegebenen und mit 17 bezeichneten selbst bei verhältnismässig grossen Elementen, z.B. solchen mit Flächenmassen von etwa 120 × 240 cm, eine überraschend gleichmässige Druckverteilung im Inneren der Kernplatte 1 mit einer maximalen Druckdifferenz von nur 20% zwischen den Unterdrücken in der Nähe der Mündung des Stutzens 17 und in den am weitesten von dieser entfernt liegenden Teilen der Kernplatte 1 erzielen lässt. Ebenso hat sich gezeigt, dass diese gleichmässige Druckverteilung von den kleineren Undichtigkeiten, die an den Verbindungsstellen zwischen den Deckplatten 2, 3 und den Stirn- und Schmalseitenwänden 4—7, und zwar insbesondere an den Eckverbindungen 11—14, vorkommen können, nicht nennenswert beeinträchtigt wird. Derartige Undichtigkeiten können aber erhöhte Anforderungen an die Pumpenleistung der Saugeinrichtung 18 stellen, und im Hinblick darauf kann es zweckmässig sein, für eine geeignete Abdichtung der Eckverbindungen 11—14 Sorge zu tragen, z.B., wie in Fig. 1 bezeigt, durch Anbringung von Klebstreifgen 19, 20, 21 und 22.

Bei den ausgeführten Versuchen konnte unmittelbar nach dem Zusammensetzen des Elements und dem Beaufschlagen desselben mit Unterdruck ein beginnendes Aufschäumen des Klebstoffs längs der Verbindungen zwischen den Stirn- und Schmalseitenwänden und den Deckplatten sowie ein gleichzeitiges Zunehmen des Unterdrucks im Inneren der Kernplatte beobachtet werden, wobei letzteres vermutlich als Folge der in sich selbst dichtenden Wirkung des Aufschäumens des Klebstoffs anzusehen ist. Die Gesamtdauer des Aufschäumens des Klebstoffs (Öffnungszeit) und des Härtens betrug, wie sich erwies, weniger als 30 Minuten.

Eine anschliessende sowohl quantitative als auch qualitative Prüfung der geleimten Verbindungen hat ausgesprochen gute Eigenschaften mit einem sehr effektiven Aufschäumen, das auf Toleranzen der Kernplatten ausgleichend wirkt, sowie eine gute Haftung nachgewiesen.

Für die industrielle Herstellung von Bauelementen der erwähnten Art bietet das erfindungsgemässe Verfahren den besonderen Vorteil, dass infolge der Erzeugung des Unterdrucks durch direktes Absaugen durch eine Öffnung in einer Schmalseitenwand mehrere Elemente gleichzeitig mit einer einzelnen, geeignet dimensionierten Saugeinrichtung behandelt werden können, an die über eine Verteilereinrichtung ggf. über individuell einstellbare Ventile eine entsprechende Anzahl Saugstutzen angeschlossen ist. Die Elemente können z.B. jeweils au sechst aufeinandergestapelt werden, wodurch gleichzeitig auch transportmässige Gegebenheiten berücksichtigt werden. Durch Anwendung einer Saugeinrichtung mit zwölf Saugstutzen zur gleichzeitigen Behandlung von zwei derartigen Elementstapeln lässt, sich bei der oben angegebenen Behandlungszeit ohne Schwierigkeiten eine Producktionsleistung von zwölf Elementen pro Stunde erreichen.

Ausserdem zeichnet sich das Verfahren in bezug auf die mechanische Presstechnik, die bisher bei der Herstellung der genannten Elemente benutzt worden ist, durch eine vorteilhafte Flexibilität auf Grund seiner Unabhängigkeit von der geometrischen Formgebung und den Abmessungen der Elemente sowie durch den aus Gründen des Arbeitsschutzes wesentlichen Vorteil aus, dass ein direktes Absaugen giftiger Dämpfe erfolgt, die beim Aushärten des Klebstoffs entstehen.

**Patentanspruch**

Verfahren bei der Herstellung eines Bauelementes, das ein einstückiges, plattenförmiges und formfestes Kernelement (1) aus einem Material, insbesondere einem Isolationsmaterial, mit einer offenen Struktur umfasst, die den Durchtritt von Luft zulässt, welches Kernelement an den sich gegenüberliegenden grossen Seitenflächen und sowohl den Stirn- als auch den schmalen Seitenflächen mit verhältnismässig dünnen, aus einem härteren, im wesentlichen luftundurchlässigen Material bestehenden Deckplatten (2, 3) bzw. mit Stirn- und Schmalseitenwänden (4—7) bleibend zu verkleiden ist, welche Deckplatten (2, 3) mit dem Kernelement (1) unlösbar verbunden werden durch Verleimen mit einem unter der Einwirkung von Feuchtigkeit schnell härtenden Klebstoff und mit einem durch Erzeugung eines Unterdruckes im Kernelement (1) hervorgebrachten Pressdruck, dadurch gekennzeichnet, dass die Stirn- und Schmalseitenwände (4—7) und die eine Deckplatte (2) zuerst zu einem offenen Kasten (10) zur Aufnahme des Kernelements (1) zusammengesetzt werden, wonach die Deckplatten (2, 3) auf den Seitenflächen, die dazu bestimmt sind, gegen das Kernelement (1) anzuliegen, befeuchtet (15) und danach mit Klebstoff (16) versehen werden, bevor das Kernelement (1) in dem genannten offenen Kasten angebracht wird, und dass nach dem Zusammenfügen des Kastens mit der anderen Deckplatte der Pressdruck durch Absaugen direkt durch eine zu diesem Zweck ausgebildete Öffnung in einer der bleibenden Stirn- und Schmalseitenwände (4) erzeugt wird.

## Revendication

Procédé de fabrication d'un élément de construction comprenant une âme (1) en forme de plaque d'un matériau, en particulier un matériau isolant, de structure ouverte qui permet le passage de l'air, cette âme étant à revêtir de manière permanente sur les grandes surfaces latérales opposées et sur aussi bien les surfaces frontales que les surfaces latérales étroites, respectivement de plaques de couverture (2, 3) relativement minces d'un matériau dur essentiellement imperméable de l'air et de plaques frontales et latérales (4—7), lesquelles plaques de couverture (2, 3) sont à relier de manière inséparable avec l'âme (1) à l'aide d'une matière collante à durcissement rapide par voie humide et à l'aide d'une pression causée par la production d'une dépression dans l'âme (1) caractérisé en ce que les plaques frontales et latérales (4—7) et l'une des plaques de couverture (2) sont assemblés en forme d'un caisson ouvert (10) pour recevoir l'âme (1), après quoi les plaques de couverture (2, 3) sur les surfaces latérales destinées à être mise en appui contre l'âme (1) sont mouillées et, ensuite, pourvues de matière collante (16) avant que l'âme (1) soit posée dans ledit caisson ouvert et en ce qu'après l'assemblage du caisson avec l'autre plaque de couverture, la pression est directement obtenu au moyen d'une aspiration par une ouverture pratiquée à cet effet dans l'une des plaques frontales et latérales permanentes.

## Claim

A method for use in the manufacture of a building element which comprises a unitary plate-shaped and form-stable core member (1) of a material, particularly an insulating material, which is permeable to air, which core member is to be permanently covered on the opposite major surfaces as well as the end faces and the lateral faces with relatively thin cover boards, (2, 3) and end and side walls (4—7) respectively, consisting essentially of an air impermeable material, said cover boards (2, 3) becoming undetachably connected with the core member (1) by being glued thereto by means of an adhesive curing rapidly under the influence of humidity and by a pressure force produced by generation of a sub-pressure in the core member (1), characterized in that the end and side walls (4—7) and one cover board (2) are initially assembled to an open casing (10) for accommodating the core member (1) whereafter the cover boards (2, 3) are humidified (15) on the surfaces to be positioned in contact with the core member (1) and subsequently an adhesive (16) is applied to the cover boards before the core member (1) is positioned in said casing, said pressure force being produced after assembling the casing with the other cover board by evacuation directly through an opening formed for this purpose in one of the permanent end and side walls (4).

FIG.1

FIG.2